# EUROPEAN PATENT SPECIFICATION

(11) **EP 2 598 891 B1**
(45) Date of publication and mention of the grant of the patent: **15.05.2024**
(21) Application number: 11767057.0
(22) Date of filing: 27.07.2011
(51) Int. Cl.: B01L 9/06, G01N 35/02, B01L 9/00

(54) **SYSTEM FOR THE ANALYSIS OF SAMPLES**
SYSTEM ZUR ANALYSE VON PROBEN
SYSTÈME POUR L'ANALYSE D'ÉCHANTILLONS

(30) Priority: 27.07.2010 IT BO20100475
(43) Date of publication of application: 05.06.2013
(73) Proprietor: EVEREX S.R.L., 50019 Sesto Fiorentino (FI) (IT)
(72) Inventor: BALLI, Lorenzo, I-50058 Signa (Firenze) (IT)
(74) Representative: Mincone, Antimo
(86) International application number: PCT/IB2011/001738
(87) International publication number: WO 2012/028913

(56) References cited:
- EP-A1- 1 384 992
- DE-A1- 19 730 445
- DE-B4- 10 262 157
- JP-A- 2007 303 960
- US-A- 4 055 396
- US-A- 5 672 317
- US-A1- 2003 155 034
- US-A1- 2006 103 051
- US-A1- 2006 263 871
- US-A1- 2007 183 926
- US-B1- 6 171 555

## Description

The present invention relates to a system for the analysis of samples.

In particular, the system can be used for the analysis of biological samples with the application in the diagnostic field.

In the analysis of biological samples, for which it is necessary that the samples react with appropriate reagents, the analysis process is now almost fully automated. In fact, the known apparatuses can pick up automatically or semi-automatically, and in succession, a series of samples; each sample to be analyzed (which is contained in a test tube or in other container) is withdrawn for reacting in correspondence of a specific area or workstation with one or more substances to verify some physical and chemical properties.

In practice, the systems to perform analysis of samples include a work surface divided into a plurality of operating stations; on the operating stations are placed various containers for the various substances used before and during the examination to be made. A movable arm provided with suction means is acting among the various areas of the work surface; the movable arm, before any examination, is equipped with a disposable tip or pipette-type to perform the withdrawal of the samples and / or of reagents and / or of mixtures formed on the work surface, such as to induce a certain reaction. During a possible examination procedure, the mobile arm, which is associated with its tip, picks one or more reagents / solvents and the sample to be tested, to take them on a workstation, where starts the reaction necessary for the examination, with the possible contribution of heat and / or other means. Once the various substances were moved along the work surface, the tip is separated from the movable arm and the apparatus provides for the cleaning of one or more areas that have to be re-used. US5672317 relates to an analyzer with a bar code reader which automatically performs analytical operations and in which liquid samples for analysis and required reagents are held in suitable vessels. The analyzer comprises vessel holders of different widths which are disposed parallel to one another in the analyzer. US4055396 relates to a tray and carrier assembly which is adapted to simultaneously handle a plurality of open ended receptacles such as test tubes.

EP1381992A1 relates to a capillary array electrophoretic device capable of securing a sample plate array and a buffer container on a tray of an autosampler.

JP2007303960A, US2007183926A1 and DE10262157B4 also disclose analysers comprising racks.

The known analysis systems, even if they allow a relative automation of analysys procedures, are not free from drawbacks, as will be explained later in this description, which will make evident the aims and the advantages of the present invention, which has the main aim the improvement of the systems for analysis of samples. This result was achieved in accordance with the invention related to a system as escribed in independent claim 1. Other features are described in the dependent claims 2 to 9.

A first advantage is that the system is equipped with a work surface formed by a plurality of parallel guides presenting a complementary section wich can be coupled with a corresponding seat of racks, the seat of said racks having a width multiple in respect of the section of said guide, with portions that are opposite to the corresponding profile of the same guide. This feature provides modularity, allowing the use of racks of different width without changing the work surface.

A second advantage is that the system is provided with a detection device of the rack arranged on one or more guides comprising a magnetic sensor which can detect the interaction between a magnet placed on the work surface and a corresponding metallic element placed on the rack. This feature allows to accurately and quickly detect the presence of a rack on a rail.

According to the invention, the system is provided with a device for supporting pipettes or tips having at least two seats spaced a certain value multiple or sub-multiple of the value of the distance between two seats placed on said racks. This feature allows multiple sampling, i.e. the sampling work on multiple seats simultaneously.

A third advantage is that each of these racks is is provided with at least three distinct barcodes: a first code to identify the serial number and type of rack, a second code, placed on the bottom of a seat intended to support the item on the rack next to an open area that is permeable to light, to allow reading the code when the seat is not occupied, and a third code which identifies the position of each seat. This feature, combined with the reading of magnetic code described above, allows for a unique recognition of all the resources that the operator puts on the bench. Both single-level recognition of correct positioning on the floor.

A fourth advantage is that the system is provided with a pair of parallel linear guides which allow the sliding of a movable bridge leading the tips for the taking and handling of substances on the work surface. This feature allows you to ensure accuracy and an extremely high intrinsic simplicity that on many systems is not known type.

A fifth advantage is that the system has a manifold for the washing liquid provided with valves arranged according to a star converging on a central duct outlet. In this way, it is much faster the washing operation of the circuit between two buffers and the chances of pollution are reduced. In other applications of a known type manifolds are generally in line.

A sixth advantage is that the system, which is provided with a plurality of containers for the washing liquid or buffer and at least one collection container is also equipped with load cells to verify the filling of said containers. Furthermore, the containers can advantageously be contained in a hidden drawer, sliding along rails so as to facilitate the emptying and replenishing operations.

An seventh advantage is that the system is provided with a cassette for discharging used tips, extending over substantially an entire dimension of the work surface. This feature greatly facilitates the unloading of the tips; the handling times are optimized and the effect of overcrowding in an only point of discharge is avoided, contrary to what happens for the systems currently on the market, in which all the used tips are deposited in a only zone (usually a tank) with the need for intervention by an operator from time to time to equalize the distribution of tips in the container. In our case, the tips are distributed over an area so large as to eliminate the problem.

A further advantage is that the system is equipped with hardware and firmware based on the concept of distributed intelligence, which includes a central unit based on a microcontroller and a plurality of peripheral cards which are also equipped with microcontrollers that manage the individual work units.

This type of control allows to have a microcontroller-based central unit having the correct power for the application and then peripherical cards which are also provided with microcontrollers that manage individual work units. In this way, there are several advantages as will be described later.

Every technician who works in this field will better understand these advantages and features and further advantages and features of the present invention thanks to the enclosed drawings as a practical explanation of the present invention, wherein:
- Fig. 1 is a top schematic perspective view of a system of analysis carried out according to the invention, provided with a movable bridge placed in the area for discharging the tips;
- Fig. 2 is a perspective view similar to that of Fig.1, in wich the movable bridge is dsposed in a different zone or station of the work surface;

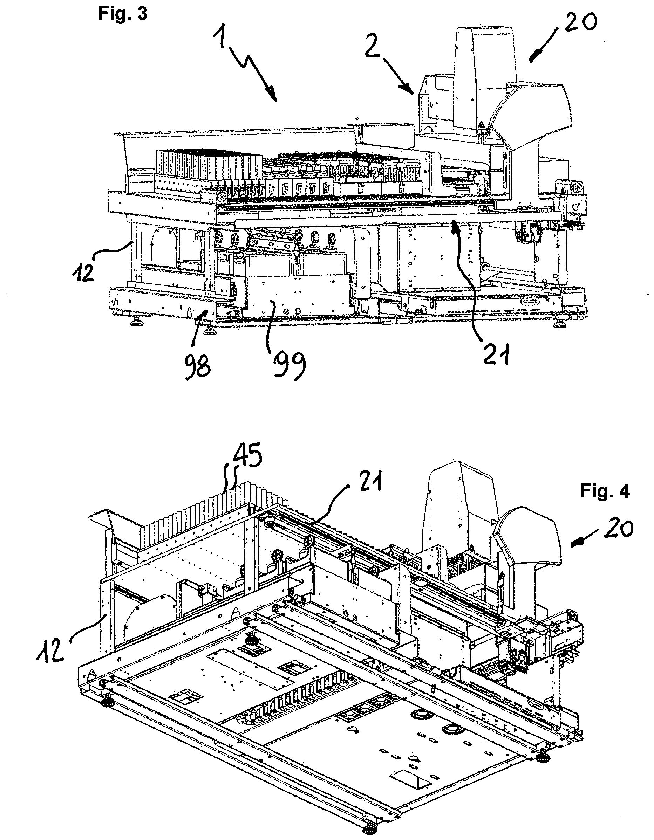

- Figs. 3, 4 are two schematic perspective views, taken from different angles, of the system of the invention; in the figures are visible, inter alia, the linear guides along which runs the movable bridge above mentioned;

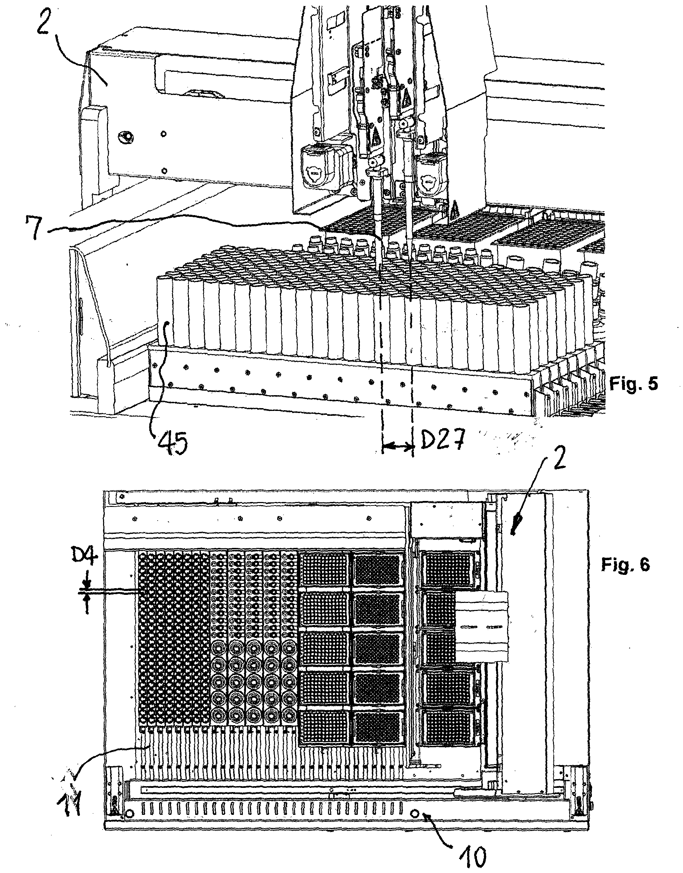

- Fig. 5 is a top schematic perspective view showing a particular of a device for supporting the tips, with the movable bridge placed at the front of the work surface;
- Fig. 6 is a schematic top view of the work plan;

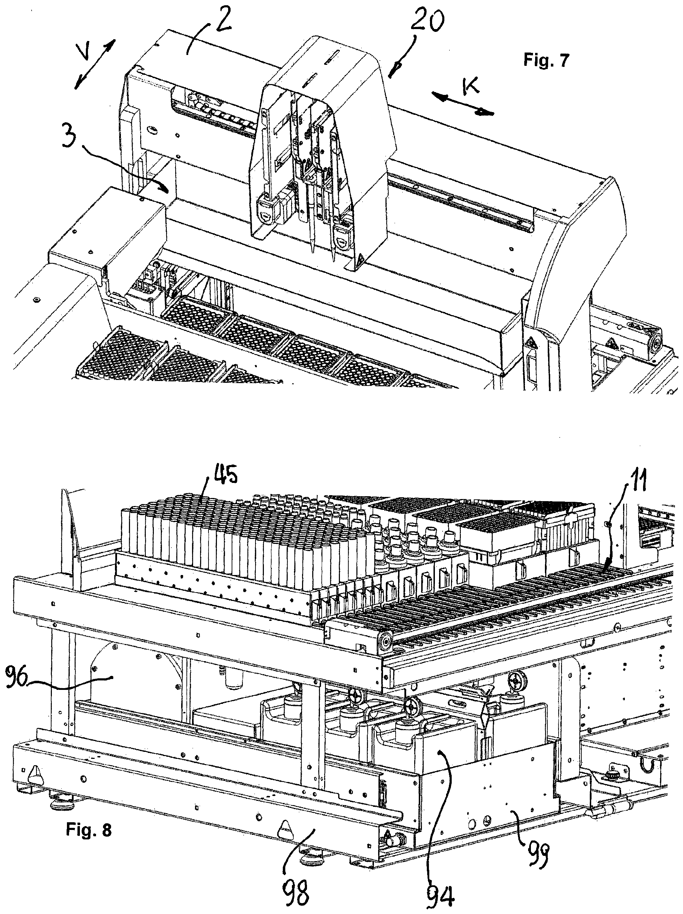

- Fig. 7 is a top schematic perspective view showing another particular of the device for supporting the tips, the movable bridge being placed in the rear of the work surface, in correspondence of the container for discharging used tips;
- Fig. 8 is a schematic perspective view of the front part of the work surface;
- Figs. 9, 10, 11, relate to a detection system for verify the correct positioning of the racks on the work surface and show, respectively, a schematic side view (Fig. 9) of a portion of rack associated to the system, and two rear schematic views (Figs. 10, 11) of possible embodiments of the rack;
- Figs. 12, 13, 14 show the tips supporting device shown, respectively, in two frontal views (Figs. 12, 13) and in a perspective view (Fig. 14);
- Figs. 15, 16 relate to a possible embodiment of a collector (manifold), shown, respectively, in a frontal view (Fig.15) and in a perspective view (Fig. 16);
- Figs. 17, 18 relate to a possible embodiment of containers for discharge liquid, shown, respectively, in a frontal view (Fig.17) and a partial perspective view (Fig.18), and
- Fig 19 is a frontal view of a possible embodiment of a rack in which is visible in a detecting system in accordance with the invention.

With reference to the figures of the annexed drawings, a system 1 in accordance with the invention includes a work surface 10 on which are placed containers for the samples to be tested, tips, containers for solvents / reagents, micro-plates to perform the reactions, etc...

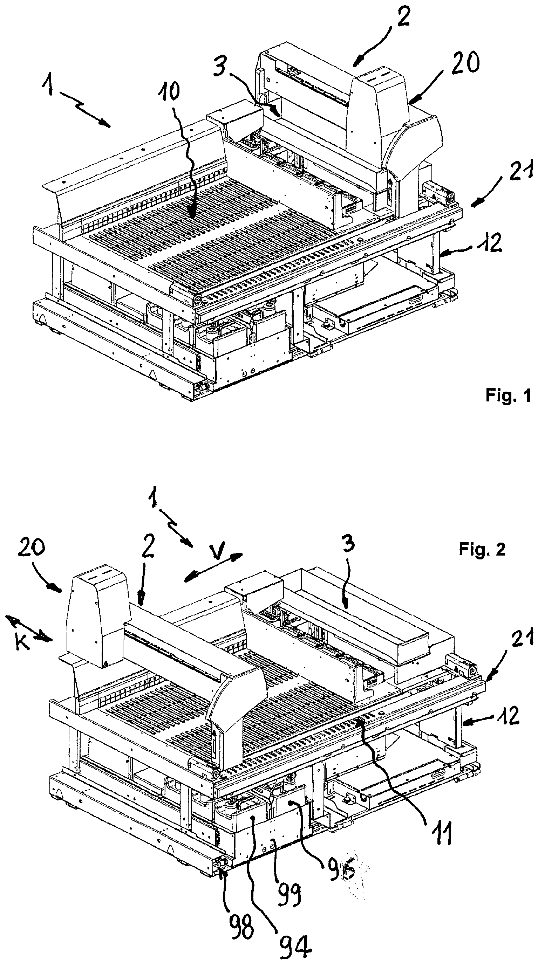

In this description, referring to the orientation of Figs.1 and 2, the area disposed on the left will be indicated as frontal area and the area placed on the right (in correspondence of the container 3 intended to receive the used tips 7) will be indicated as back area.

The work surface 10, which in the example is supported by vertical legs 12, is formed by a plurality of linear guides 11 having a section which is complementary shaped in respect to a corresponding seat 41 of the racks 4 to be associated on the same surface 10. In practice, with reference to the example shown, the guide section 11 is substantially T-shaped and the racks 4 are provided with a seat 41 in which there is a cavity that can be associated with said guides 11. With the solution of the present invention, it is possible to associate racks of different sizes to the guides 11, since the seats of the different racks have a width which is a multiple of the width of the section of the guide 11 and the same seats have portions 410 that correspond to the profile of the guide. The term "different dimension" means the development of the rack in a direction orthogonal to the longitudinal development of the guide 11.

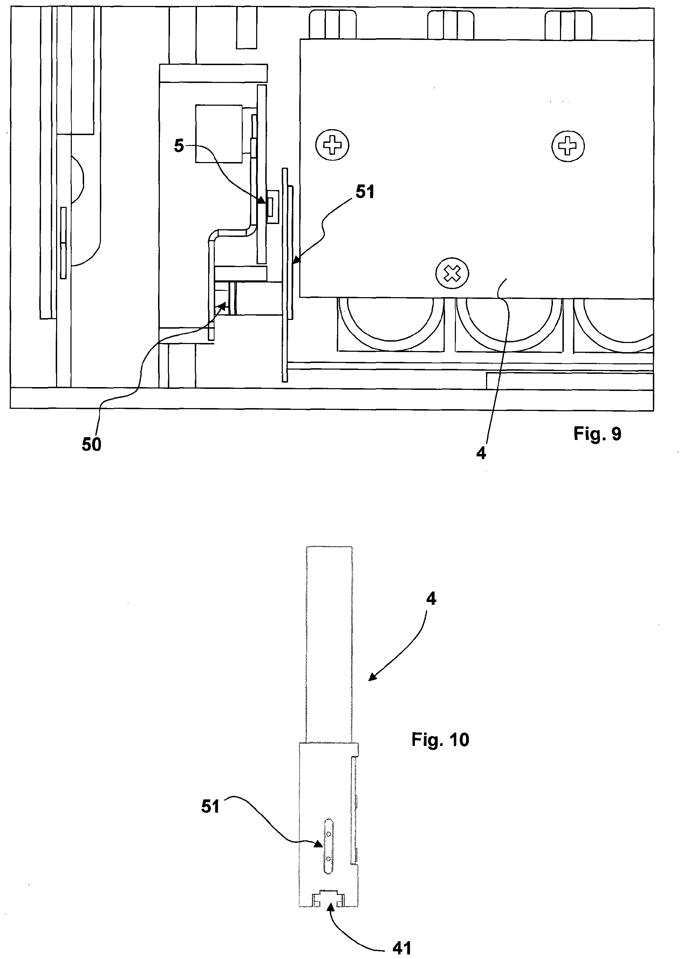

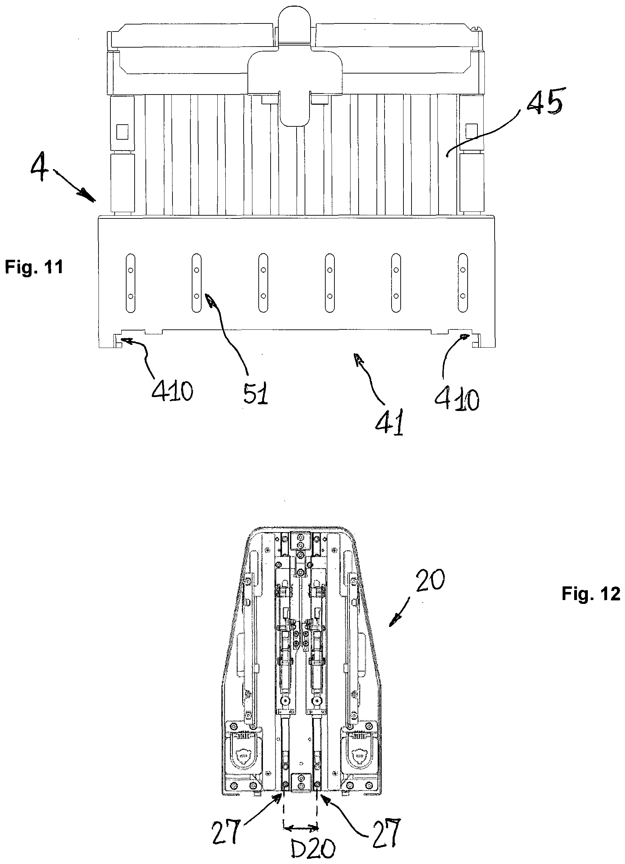

Referring to Figs.10 and 11, a "single" rack 4 (see Fig.10) which can be used, for example, for supporting the samples to be tested, is provided with a seat 41 whose profile matches the profile of the guide 11; a "multiple" rack 4, as shown in Fig.11 (which in this example has a corresponding development of six single rack), has two opposing hollow portions 410 which delimit the cavity 41 in orde to slide on two profiles of the guides 11 spaced apart by six units, i.e., arranged so as to include within them five guides. In this way, the rack can be placed randomly throughout the work surface, because all the guides 11 which form the same surface 10 are able to receive racks of different sizes. This feature determines an advantage in respect to the state of the art that, in contrast, provides guides which are not exchangeable for the different racks. In other words, according to the present invention all the resources, in terms of any choice made - depending of the type of examination, the number of samples, the type of reagents and / or containers used, etc. - can be placed on th work surface.

In addition, a system 1 in accordance with the present invention is able to determine the type and number of 4 racks fitted to the worktop 10.

In the example shown the system is provided with electronic sensing devices that, in this case, are magnetic, but may also comprise optical-beam or reflective devices.

The system is able to identify the type of rack placed on the rails and how many units (understood as the number of guides involved) compose the same rack. For example, the rack which supports samples for analysis can be a one-unit rack, the rack which supports reagents and controls can be a two- unit rack, such as the rack supporting the tips, and the rack which supports the dilution plates may include six units. The magnetic detection system, which will now be described, has the advantage that is not adversely affected by dust and dirt as could happen, on the contrary, for an optical system.

As shown in Fig. 9, on the frame of the apparatus that defines the system 1 is attached a magnetic sensor 5 which can recognize the interaction between a magnet 50 placed on the apparatus and a corresponding plate of iron 51 placed on the rack 4. In practice, the plate 51 extends vertically as to connect the magnet 50, disposed at the bottom, with the corresponding sensor 5, arranged at the top. Since each rack 4 provides a plate for each of the constituent units, the system is able to recognize, automatically, the width of each rack 4 on inserted on the guides 11 which form the work surface 10. In other words, the number of magnets "engaged" by the plates determines the value of the assessment determined by the system.

According to the invention, the device 20, which supports the tips 7, is capable of carrying two tips, for which there are two corresponding seats 27 spaced a certain value D27 (e.g. 36 mm) and that the sample holder rack 4 have a test tube-step D4 having a second determined value (e.g. 18 mm), said second value being related to the value D27 which is the value of the distance between the tips, and related to the value D4' which is the value of the distance between the seats of the reaction plates (e.g. 9 mm); in this way is possible to take two samples simultaneously at a time, simultaneously treating as the step between the two pipette holders is a multiple of step between the the seats on the reaction plates. As an example, the step of the reaction plates may be equal to 9 mm on the narrow side (where there are 8 seats), the same happens for the dilution plates and tip holder boxes. This allows a reduction in time by almost 50% and a significantly reduction of the movement of the movable bridge 2 that moves the two tip holders in an optimized way.

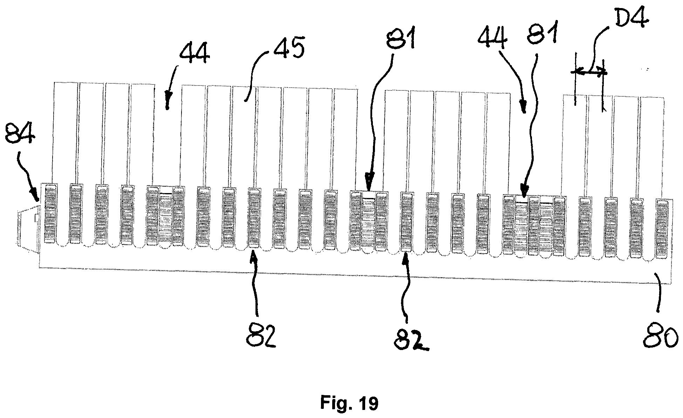

A further advantage of the present invention is that the rack 4 to associate with the work surface 10 are all provided with three distinct bar codes, as shown in Fig.19. On the work surface, or in correspondence of the movable bridge 2, there are suitable reading means to recognize the bar codes when the racks are associated with the work surface 10. The first code 80, placed right in the drawing, is what identifies the serial number of the rack and the type (a sequential number with a number for the type: sample holder rack, reagents racks, reagents rack for a specific reagents application, etc...); the second code 81 is placed at the bottom of the seat 44 for the test tube 45 (or other container) and has an underlying code with the position of the tube 45. The seat 44 is open on yhe bottom or, however, permeable to light, so that it is possible to read the code 81 when the seat 44 is not occupied by the tube 45. This will determine whether in the seat 44 there is a test tube 45 (or a bottle of reagent or whatever depending on the type of rack). The third bar code 82 identifies the position of each seat 44. The numeral reference 84 corresponds to a handle grip. In practice, once a first code 80 has been read, the system detects the serial number of the rack and its type (samples, reagents, etc...). When the second code 81 has been read, it means that in that position no object was placed; on the contrary, if the second code 81 is not read but, instead, it is read another code, this code will correspond to a specific object code that can be added to the rack; in the absence of reading (no code recognized) there may be several possibilities: the object may not have entered the bar code, the object can not be positioned correctly, the barcode is unreadable, etc..: interpreting this information the system provides a signal to management software that will alert the operator. The reading of the third code 82 allows the correlation of the position along the rack to the code read at the previous seat 44. This is repeated in successive positions, i.e. for each of the 44 seats; the only code that is present only once is the first code 80, that identifies the serial number and type of rack. This feature combined with the reading of the magnetic code allows a unique recognition of all the resources that the operator puts on the work surface, regarding the single recognition and the correct positioning on the surface.

The movable bridge 2 is moved along the work surface in a direction V orthogonal to the development of the guides 11 which form the work surface 10. The device 20, which supports the tip 7, can move along the development of the movable bridge 2 in a direction K perpendicular to the movement direction of the bridge 2. The leads 7, finally, are moved vertically (Z direction) by the device 20. Another advantage of the present invention derives from the use of two parallel linear guides 21 which allow the sliding of the movable bridge 2 that supports the two holder tips, guides that are directly attached to the work surface. In practice, there aren't differences due to the relative positioning between the guides 21 and 10 work surface. This feature allows an extremely high intrinsic accuracy and a manufacturing simplicity that the known type systems haven't.

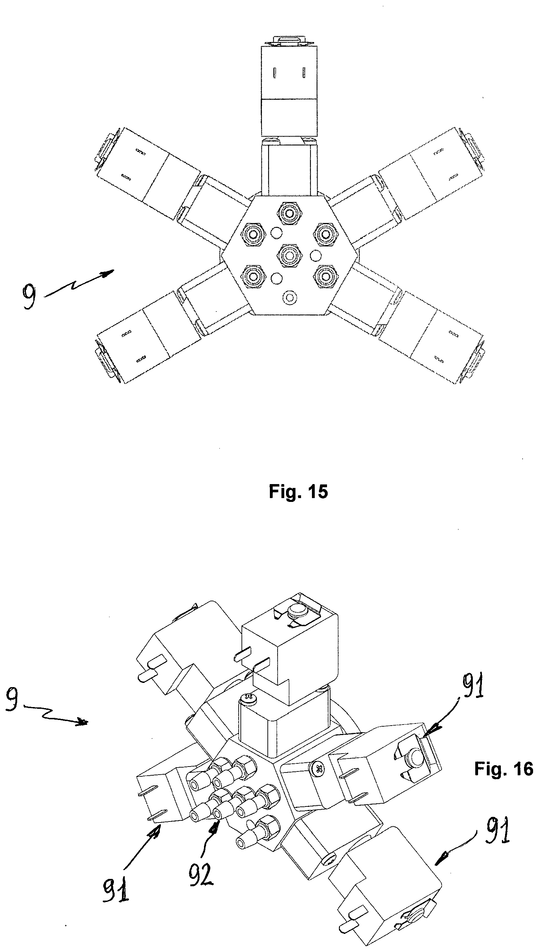

In Figs. 15 and 16 is shown as a possible embodiment of a manifold 9 for the washing liquid used, for example, to clean the micro-plates on which are placed the samples to react. The manifold 9 is made of plastic and it houses the valve 91 which provide buffers for the washing liquid. The peculiarity of this manifold is the fact that the valves 91 are arranged according a star, and all converge on a central outlet hole 92 . In this way, the washing operation of the circuit between a buffer an the other is much faster and the chances of pollution are reduced. In other applications of a known type manifolds are generally in line. The drawings show six valves, but the valves may be more or less depending on the needs of the machine.

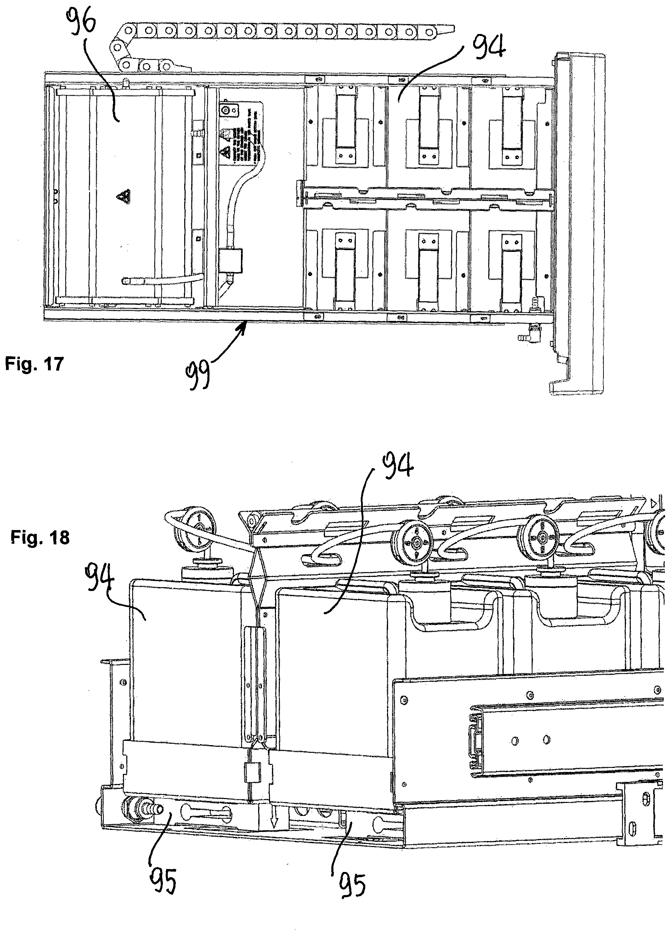

Figs. 17, 18 show a tray 99 containing six cans for 94 wash buffers (which are connected to the valves 91 mentioned above) and the tank 96, which collects all the used washing liquid (waste tank). The peculiarity of this group of the system lies in the fact that it is completely hidden, since it is mounted on telescopic rails 98 (visible in Fig.2); on the contrary, the similar equipment currently on the market are provided with tanks placed out of the apparatus or even placed on the floor. Furthermore, compared to the prior art apparatus, the level sensors with electrical components, that are immersed in the liquid, have been removed; the elimination of level sensors with electrical components determines the elimination of significant safety and maintenance problems that distinguish the known techniques for the frequency, usually at least daily, of the replacement of tanks, replacement which can produce a deterioration of the cables that connect the sensors. Instead of the level sensors, the present invention provides load cells 95 which continuously monitor the weight of residual liquid inside the tanks both for the buffers 94 and for the waste 96.

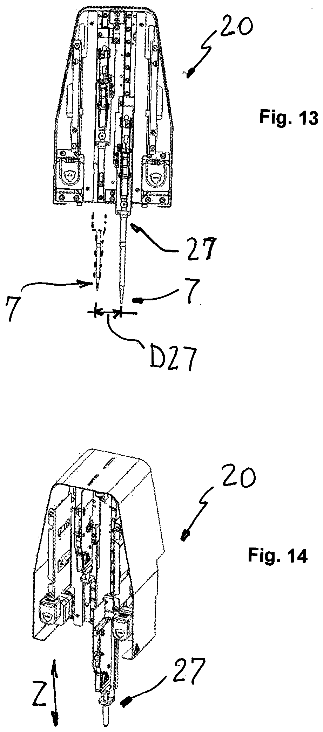

Figs. 12-14 show the tip pick-up and release system incorporated all in the same mechanism; this allows to release the tip 7 at any position, without having to go in a fixed position as it is provided in the apparatuse currently on the market. The system i salso provided with a cassette 3 for discharging exhaust tips 7 that extends throughout all the depth of the work surface 10, near the plates for analytical reaction. This allows to optimize the handling time and avoid the effect of overcrowding in the only point of release, as the equipment currently on the market, in which all tubes are deposited in one area (usually a tank) with the need for intervention from time to time to equalize the distribution of tips in the container. In our case, the tips are distributed over an area so large as to eliminate the problem.

Another important feature of this system is to have a hardware and firmware electronic control based on the concept of distributed intelligence, the type known as profibus (in industrial automation) or can bus (mainly in the automotive sector). This type of control allows to have a microcontroller-based central unit having the correct power for the application and then peripherical cards which are also provided with microcontrollers that manage individual work units. In this way, there are several advantages. It is sufficient a single cable which by means of connectors carries the signals between peripheral cards and the central unit; in this cable are also carried all supply voltages for the various connected devices. In addition, there are micro-tasks performed on the peripheral cards, the central unit sending to the peripheral units macro instructions that the same peripherical units will interpret. In practice, there are more small units where easily testable small firmwares are stored and a central firmware which sends macro-commands and receives macro-responses relating to execution of the command or to possible happened error. The central unit can be connected to a camera to be used as a web-camera for a remote monitoring of the apparatus.

The control and monitoring members of the elements described above and illustrated in the attached drawings are of the type known to the skilled in the art and, therefore, were not described in further detail for simplicity.

## Claims

1. System for the analysis of samples comprising:
- a work surface (10) which is configured to support a number of racks (4), said racks supporting, housed in corresponding tube seats (44), tubes or containers (45) to be analyzed;
- a number of racks (4) of different widths that are configured to support tubes or containers (45) to be analyzed;
- a device (20) for supporting pipette or tips (7) provided with a corresponding pipette seat (27) used for said pipettes or tips;
- the work surface (10) comprising a plurality of parallel guides (11), each guide (11) having a profile which is complementary matchable with the profile of a corresponding rack seat (41) of said rack (4), said rack seat (41) forming a cavity,
the system being **characterized in that**
each of said rack seats (41) is delimited by two opposing hollow portions (410) configured to slide on two profiles of the parallel guides (11), the width of each rack seat (41) being a multiple of the width of the section of said guide (11), so to allow the racks having different widths to match their respective rack seat (41) with a couple of guides (11) spaced apart by different values;
- the pipette seats (27) for the pipettes or tips are at least two and are spaced of a certain value (D27) multiple or sub-multiple of the value (D4, D4') of the distance between two tube seats (44) of the same said racks (4).

2. System according to claim 1, wherein it is provided with a sensing device of the rack (4) arranged on one or more guides (11), comprising a magnetic sensor (5), which detects the interaction between a magnet (50) provided on the work surface (10) and a corresponding metallic element (51) provided on the rack (4).

3. System according to claim 1, wherein each of said racks (4) is provided with at least three distinct barcodes: a first code (80) to identify the serial number and type of rack, a second code ( 81), placed on the bottom of a tube seat (44) intended to support the item on the rack next to an open area that is permeable to light, to allow reading the code (81) when the tube seat (44) is not occupied, and a third code (82) which identifies the position of each tube seat (44).

4. System according to claim 1, wherein it is provided with a pair of parallel linear guides (21) which allow the sliding of a movable bridge (2) leading the tips (7) for the taking and handling of substances on the work surface (10).

5. System according to claim 1, wherein it is provided with a collector (9) for the washing liquid provided with valves (91) arranged according to a star and joined by a central duct (92) delivery.

6. System according to claim 1, in particular provided with a plurality of containers for washing liquid or buffer (94) and at least one collection container (96), wherein it is provided with load cells (95) designed to check the filling of said containers (94, 96).

7. System according to claim 6, wherein said containers are stored in a closed drawer (99), sliding on guides (98).

8. System according to claim 1, wherein it is provided with a cassette (3) for discharging used tips (7), extending over substantially an entire dimension of the work surface (10).

9. System according to claim 1, wherein it is provided with hardware and firmware based on the concept of distributed intelligence, which includes a central unit based on a microcontroller and a plurality of peripheral cards which are also equipped with microcontrollers that manage individual work units.

## Patentansprüche

1. System für die Analyse von Proben, umfassend:
- eine Arbeitsfläche (10), die so konfiguriert ist, dass sie eine Anzahl von Gestellen (4) trägt, wobei die Gestelle in entsprechenden Röhrchensitzen (44) untergebrachte Röhrchen oder Behälter (45) tragen, die analysiert werden sollen;
- eine Anzahl von Gestellen (4) unterschiedlicher Breite, die so konfiguriert sind, dass sie zu analysierende Röhrchen oder Behälter (45) tragen;
- eine Vorrichtung (20) zum Tragen von Pipetten oder Spitzen (7), die mit einem entsprechenden Pipettensitz (27) bereitgestellt ist, der für die Pipetten oder Spitzen verwendet wird;
- wobei die Arbeitsfläche (10) eine Vielzahl paralleler Führungen (11) umfasst, wobei jede Führung (11) ein Profil aufweist, das komplementär an das Profil eines entsprechenden Gestellsitzes (41) des Gestells (4) anpassbar ist, wobei der Gestellsitz (41) einen Hohlraum bildet,
wobei das System **dadurch gekennzeichnet ist, dass**
jeder der Gestellsitze (41) von zwei gegenüberliegenden hohlen Abschnitten (410) begrenzt ist, die so konfiguriert sind, dass sie auf zwei Profilen der parallelen Führungen (11) gleiten, wobei die Breite jedes Gestellsitzes (41) ein Vielfaches der Breite des Teils der Führung (11) beträgt, um den Gestellen, die unterschiedliche Breiten aufweisen, zu ermöglichen, sich mit einem Paar von Führungen (11), die um unterschiedliche Werte beabstandet sind, an ihren jeweiligen Gestellsitz (41) anzupassen;
- die Pipettensitze (27) für die Pipetten oder Spitzen mindestens zwei sind und um einen gewissen Wert (D27) beabstandet sind, der ein Vielfaches oder ein Bruchteil des Wertes (D4, D4') des Abstands zwischen zwei Röhrchensitzen (44) derselben Gestelle (4) ist.

2. System nach Anspruch 1, wobei es mit einer Abtastvorrichtung des Gestells (4) bereitgestellt ist, die an einer oder mehreren Führungen (11) angeordnet ist, umfassend einen Magnetsensor (5), der die Wechselwirkung zwischen einem auf der Arbeitsfläche (10) bereitgestellten Magneten (50) und einem entsprechenden metallischen Element (51), das am Gestell (4) bereitgestellt ist, erfasst.

3. System nach Anspruch 1, wobei jedes der Gestelle (4) mit mindestens drei unterschiedlichen Strichcodes bereitgestellt ist: einem ersten Code (80), um die Seriennummer und den Gestelltyp zu identifizieren, einem zweiten Code (81), der auf der Unterseite eines Röhrchensitzes (44) platziert ist, der dazu gedacht ist, den Gegenstand auf dem Gestell neben einer offenen, lichtdurchlässigen Fläche zu tragen, um Lesen des Codes (81) zu ermöglichen, wenn der Röhrchensitz (44) nicht besetzt ist, und einem dritten Code (82), der die Position jedes Röhrchensitzes (44) identifiziert.

4. System nach Anspruch 1, wobei es mit einem Paar paralleler Linearführungen (21) bereitgestellt ist, die das Gleiten einer beweglichen Brücke (2) ermöglichen, die die Spitzen (7) für die Aufnahme und Handhabung von Substanzen auf der Arbeitsfläche (10) führt.

5. System nach Anspruch 1, wobei es mit einem Sammelbehälter (9) für die Waschflüssigkeit bereitgestellt ist, der mit Ventilen (91) bereitgestellt ist, die sternförmig angeordnet sind und durch einen zentralen Zufuhrkanal (92) verbunden sind.

6. System nach Anspruch 1, insbesondere mit einer Vielzahl von Behältern für Waschflüssigkeit oder Puffer (94) und mindestens einem Sammelbehälter (96) bereitgestellt, wobei es mit Wägezellen (95) bereitgestellt ist, die dazu bestimmt sind, die Füllung der Behälter (94, 96) zu überprüfen.

7. System nach Anspruch 6, wobei die Behälter in einer geschlossenen Schublade (99) aufbewahrt werden, die auf Führungen (98) gleitet.

8. System nach Anspruch 1, wobei es mit einer Kassette (3) zum Abführen verbrauchter Spitzen (7) bereitgestellt ist, die sich im Wesentlichen über die gesamte Abmessung der Arbeitsfläche (10) erstreckt.

9. System nach Anspruch 1, wobei es mit Hardware und Firmware bereitgestellt ist, die auf dem Konzept verteilter Intelligenz basieren, das eine auf einem Mikrocontroller basierende Zentraleinheit und eine Vielzahl von Peripheriekarten, die ebenfalls mit Mikrocontrollern ausgestattet sind, die einzelne Arbeitseinheiten verwalten, beinhaltet.

## Revendications

1. Système d'analyse d'échantillons comprenant :
- une surface de travail (10) qui est configurée pour supporter un nombre de râteliers (4), lesdits râteliers supportant, logés dans des sièges de tube correspondants (44), des tubes ou des récipients (45) à analyser :
- un nombre de râteliers (4) de différentes largeurs qui sont configurés pour supporter des tubes ou des récipients (45) à analyser ;
- un dispositif (20) pour supporter des pipettes ou des embouts (7) muni d'un siège de pipette correspondant (27) utilisé pour lesdites pipettes ou lesdits embouts ;
- la surface de travail (10) comprenant une pluralité de guides parallèles (11), chaque guide (11) présentant un profil qui peut s'adapter par complémentarité au profil d'un siège (41) de râtelier correspondant dudit râtelier (4), ledit siège (41) de râtelier formant une cavité,
le système étant **caractérisé en ce que**
chacun desdits sièges (41) de râtelier est délimité par deux parties creuses opposées (410) configurées pour glisser sur deux profils des guides parallèles (11), la largeur de chaque siège (41) de râtelier étant un multiple de la largeur de la section dudit guide (11), de manière à permettre aux râteliers présentant des largeurs différentes de correspondre à leur siège (41) de râtelier respectif avec une paire de guides (11) espacés de différentes valeurs ;
- les sièges de pipette (27) pour les pipettes ou embouts sont au moins au nombre de deux et sont espacés d'une certaine valeur (D27) multiple ou sous-multiple de la valeur (D4, D4') de la distance entre deux sièges (44) de tube des mêmes dits râteliers (4).

2. Système selon la revendication 1, dans lequel est présent un dispositif de détection du râtelier (4) agencé sur un ou plusieurs guides (11), comprenant un capteur magnétique (5), qui détecte l'interaction entre un aimant (50) disposé sur la surface de travail (10) et un élément métallique correspondant (51) disposé sur le râtelier (4).

3. Système selon la revendication 1, dans lequel chacun desdits râteliers (4) est muni d'au moins trois codes-barres distincts : un premier code (80) pour identifier le numéro de série et le type de râtelier, un deuxième code (81), placé sur le fond d'un siège (44) de tube destiné à supporter l'article sur le râtelier à proximité d'une zone ouverte qui est perméable à la lumière, pour permettre la lecture du code (81) lorsque le siège (44) de tube n'est pas occupé, et un troisième code (82) qui identifie la position de chaque siège (44) de tube.

4. Système selon la revendication 1, dans lequel est présente une paire de guides linéaires parallèles (21) qui permettent le coulissement d'un pont mobile (2) menant les embouts (7) pour le prélèvement et la manipulation de substances sur la surface de travail (10).

5. Système selon la revendication 1, dans lequel est présent un collecteur (9) pour le liquide de lavage muni de soupapes (91) agencées en étoile et reliées par une distribution par conduit central (92).

6. Système selon la revendication 1, en particulier muni d'une pluralité de récipients pour un liquide de lavage ou un tampon (94) et d'au moins un récipient de collecte (96), dans lequel sont présentes de cellules de pesée (95) conçues pour vérifier le remplissage desdits récipients (94, 96).

7. Système selon la revendication 6, dans lequel lesdits récipients sont stockés dans un tiroir fermé (99), coulissant sur des guides (98).

8. Système selon la revendication 1, dans lequel est présente une cassette (3) pour évacuer des embouts usagés (7), s'étendant sur sensiblement toute une dimension de la surface de travail (10).

9. Système selon la revendication 1, dans lequel sont présents un matériel et un micrologiciel basés sur le concept d'intelligence distribuée, qui inclut une unité centrale basée sur un microcontrôleur et une pluralité de cartes périphériques qui sont également équipées de microcontrôleurs qui gèrent des unités de travail individuelles.
